**Europäisches Patentamt**

**European Patent Office**

**Office européen des brevets**

(19)

(11) Publication number: **0 239 134**
**B1**

(12) # EUROPEAN PATENT SPECIFICATION

(45) Date of publication of the patent specification:
**12.09.90**

(51) Int. Cl.⁵: **G01B 5/02**, G01B 5/00

(21) Application number: **87200124.3**

(22) Date of filing: **27.01.87**

(54) **A linear measuring displacement device.**

(30) Priority: **18.03.86 SE 8601261**

(43) Date of publication of application:
**30.09.87 Bulletin 87/40**

(45) Publication of the grant of the patent:
**12.09.90 Bulletin 90/37**

(84) Designated Contracting States:
**DE ES FR GB IT**

(56) References cited:
**DE-A- 2 741 747**
**GB-A- 2 084 327**
**US-A- 4 015 339**

(73) Proprietor: **AB Samefa, Box 7 Granlidsvägen 4,
S-736 00 Kungsör(SE)**

(72) Inventor: **Danielsson, Lennart, Östermalmsgatan 98 IIItr,
S-114 59 Stockholm(SE)**

(74) Representative: **Nydell, Peder, Nydells Patentbyra
Fridhemsgatan 13, S-392 37 Kalmar(SE)**

## Description

### TECHNICAL FIELD

The present invention relates to a linear displacement measuring device comprising a slide holder, a measuring slide carried by said slide holder and arranged for rectilinear movement, and a measuring scale for registering the position of the slide relative to a reference position.

The linear displacement measuring device is intended particularly, although not exclusively, for measuring dimensions on damaged vehicle chassis.

### BACKGROUND PRIOR ART

One such linear measuring device is known from GB-A 2 084 327. This known system, see Figure 2, comprises a slide assembly which has a graduated scale attached rigidly along one long side thereof and which is carried by a slide holder in a manner to enable the slide to be displaced rectilinearly at right angles to the longitudinal axis of an elongated measuring bridge. One drawback with this known system, however, is that it is sometimes difficult for the operator to read-off the measurement registered on the scale, due to the fact that the space available to this end is often relatively confined and because the operator has to stoop forward, towards the bridge, in order to take a reading.

If it is also necessary for the operator to read-off the position of the slide holder on the bridge, said holder being transversely displaceable relative to the slide, the operator must, of necessity, take this reading in a sighting line which is at right angles to the sighting line along which the measurement registered on the scale is read-off.

### Summary of the Invention

A prime object of the invention is therefore to provide a linear displacement measuring device of the aforedescribed kind in which the position of the measuring slide in relation to the measuring-slide holder can be read-off in the displacement direction of the slide, i.e. a device in which the position of the slide can be read-off from the free end of the slide instead of from the long side thereof.

Another object of the invention is to provide a linear displacement measuring device of the aforementioned kind with which the positions of the measuring slide and the measuring-slide holder can be read-off along one and the same sighting line when said slide and said holder are displaced in directions mutually perpendicular to one another.

These objects are achieved with a linear displacement measuring device constructed in accordance with the invention and having the characterizing features set forth in the following Claim 1.

Further developments of the invention are defined in the dependant claims.

The measuring tape incorporated in the measuring device according to the invention is not immovably attached to the slide, but is instead slidably connected thereto through the intermediary of a measuring tape portion which runs through a tape holder provided at the free end of the slide, this tape portion extending at right angles to the displacement direction of the slide. The measuring tape runs, or extends, in a loop which is caused to accompany the movement of the slide. Thus, by suitable graduation of the scale of the measuring tape it is possible to read-off the position of the slide from the aforesaid tape portion, i.e. along a sighting line pointed in the same direction as the displacement direction of the slide.

By "the position of the measuring slide" is meant in this specification the position of a selected reference location on the measuring slide, normally a location onto which a so-called measuring-location detector can be brought, e.g. a measuring point which can be extended towards a selected measuring location on an object to be measured, for example the chassis of an automotive vehicle. The position of the measuring slide is therewith related to a reference position for the slide holder. When measuring dimensions on vehicle chassis, the reference position of the slide-holder is the central, longitudinal vertical plane through the chassis, wherewith the registered position of the slide denotes the horizontal distance from the vertical plane to the selected reference location on the slide.

Thus, when the slide holder is displaceable in a direction at right angles to the measuring slide, as in the case of the aforementioned known vehicle chassis measuring system, the advantage is afforded whereby the position of the measuring slide can be read-off from the free end of the slide, and whereby the mutual positions of the slide and the slide holder can be read-off from one and the same sighting direction. Consequently, since the linear scale of the measuring-location detector can normally be turned outwardly away from the measuring bridge, it is also possible to read-off this linear scale in said sighting direction, i.e. linear displacements in three mutually perpendicular directions can be read-off in one and the same sighting direction.

### Brief Description of the Drawings.

The invention will now be described in more detail with reference to the accompanying drawings, which illustrate a preferred embodiment of the invention applied in a system for establishing the dimensions of a vehicle chassis.

Figure 1 is a perspective view of a linear displacement measuring device, or linear dimension measuring device, according to the invention.

Figure 2 is a perspective view of a linear measuring tape used in the device of Figure 1.

Figure 3 is a perspective view of a catch means for co-operation with a measuring slide incorporated in the device illustrated in Figure 1.

Figure 4 is a cross-sectional view taken on the line A-A in Figure 1, and illustrates a measuring tape holder incorporated in the device of Figure 1.

Figure 5 is a perspective, exploded view of the device of Figure 1, and shows the appearance of the device prior to fitting the measuring tape thereto.

## Description of a Preferred Embodiment

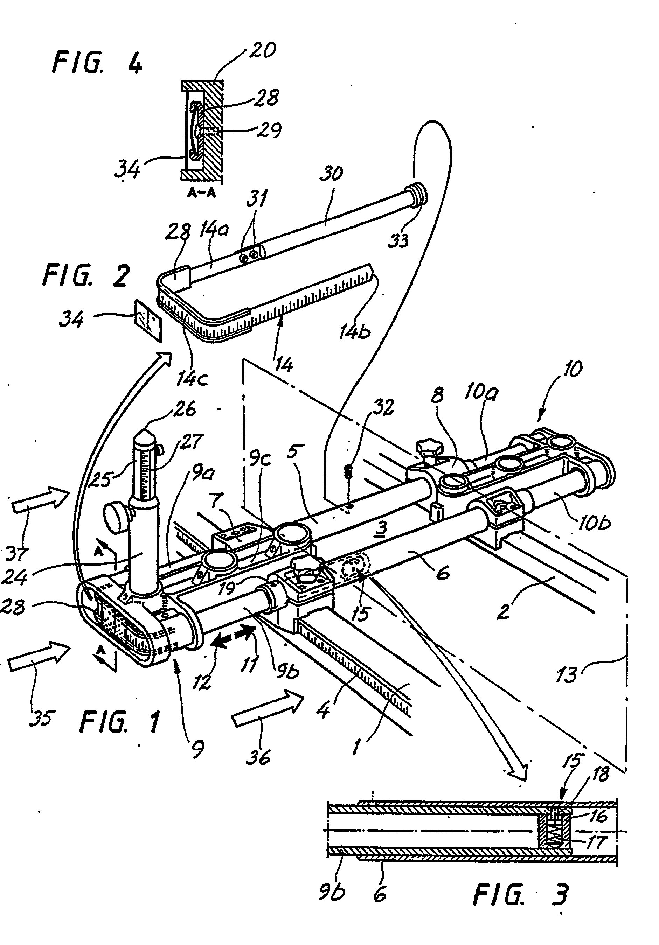

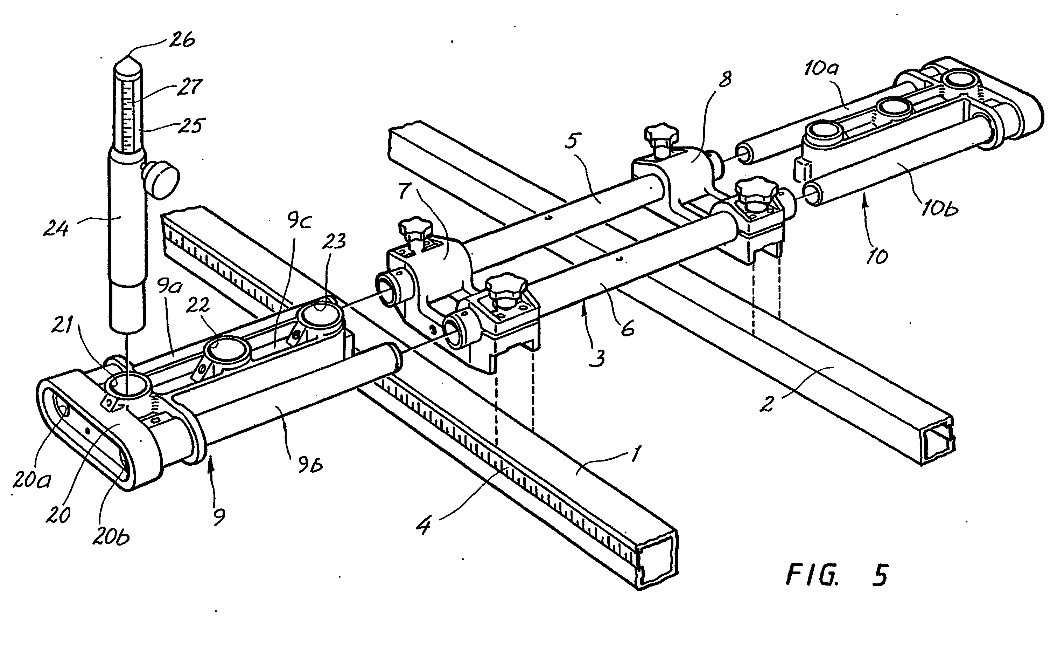

Figure 1 (and also Figure 5) illustrates part of two elongated, horizontally arranged and mutually parallel measuring beams 1 and 2, which are made of steel or of a comparable material and which form part of a beam frame (not shown) forming a so-called measuring bridge for measuring the dimensions of damaged vehicle chassis. Such measuring bridges are intended to be placed beneath the chassis (not shown) in a known manner, while resting on a chassis alignment or straightening bench, or on some other support surface. This kind of measuring bridge is well known to those skilled in the art, and will not therefore be described or illustrated here.

The beams 1 and 2 carry a carriage 3 which can be moved along the beams, parallel with a reference plane 13, this plane being described in more detail hereinafter. The distance through which the carriage 3 is moved from a given starting position (not shown) can be read-off from a graduated scale 4 rigidly arranged along the outer surface of one measuring beam 1. The carriage 3, which can best be seen from Figure 5, consists mainly of two mutually parallel, hollow cylindrical metal tubes 5 and 6 which extend across the measuring beams, and which are carried by two metallic slide shoes 7 and 8, said shoes being slidable along the beams 1 and 2.

The carriage 3 forms a holder for two substantially U-shaped metallic measuring slides 9 and 10 which can be displaced rectilinearly, transversely to the direction of movement of the holder. The slides 9 and 10 may be made, for example, of steel and present respective pairs of hollow cylindrical legs 9a, 9b and 10a, 10b which fit into the respective ends of the hollow tubes 5 and 6 of the carriage 3, said tubes thus forming measuring slide channels.

The slides 9 and 10 can be moved axially and independently into and out of the tubes 5 and 6 of the carriage 3, as indicated by the arrows 11 and 12 in Figure 1. Displacement of the measuring slides 9 and 10 thus takes place in the horizontal plane at right angles to the direction of carriage movement. The position of respective slides is related to a reference position, which in the illustrated embodiment takes the form of a centrally located vertical plane 13 extending longitudinally through the measuring bridge as shown in chain lines. The positions of each of the measuring slides in relation to the reference plane 13 can be read-off from a respective linear measurement scale in the form of a measuring tape or band 14, which is preferably made of metal e.g. steel. Since the slides 9 and 10 are of mutually identical construction, the slides will be described hereinafter solely with reference to the one slide 9 and its associated measuring tape 14.

As will be seen from Figures 1 and 3, the free end of one tubular leg 9b of the slide 9 has provided thereon a catch means 15 which is operative in preventing the slide from being fully withdrawn from the tubes 5 and 6 of the carriage 3, so as to be free therefrom. The catch means 15 comprises an upwardly open, tubular sleeve 16 (Figure 3) which is fitted securely in the tube 9b (e.g. by means of a shrinkage fit or some other suitable joint) and houses a catch bolt 18, which is biased forwardly or upwardly by a spring 17. The bolt 18 can be arranged to snap into a corresponding hole or recess 19 located adjacent the free end of the tube 3, under the action of the spring 17, when the slide is withdrawn to the maximum extent permitted, so as to prevent the withdrawal of said slide.

The tubular legs 9a and 9b of the slide 9 are held apart by a metallic end-piece assembly 20, in which there are provided two through-bores 20a and 20b (Figure 5) having the same internal dimensions as the outer dimensions of the tubes 9a and 9b. The ends of the tubes 9a and 9b are each inserted in a respective bore 20a and 20b and held therein with the aid of suitable means herefor, e.g. a clamp or screw joint.

Extending from the end-piece assembly 20, between the legs 9a and 9b and parallel therewith, is an additional, centre leg 9c. Arranged in the centre leg 9c are three vertically extending socket-like holes 21-23, which are dimensioned to receive a measuring-location detector, e.g. in the form of a gauge pin 25 which can be raised and lowered in a housing sleeve 24 and which has a measuring point 26 capable of being adjusted positionally to a selected location on an object to be measured, in the illustrated case the chassis of an automotive vehicle. The measuring point 26 thus defines the position of the slide 9 in relation to the reference plane 13, i.e. the measurement registered on the linear scale 14 of the slide corresponds to the distance of the point 26 from the reference plane 13. The gauge pin 25 is provided in a known manner with a graduated scale 27, which can be turned to face in any desired direction, by twisting the gauge pin 25 or its houing sleeve 24.

The housing sleeve 24 can be placed in any of the socket-like holes 21-23. The linear scale on the measuring slide 9, however, is normally graduated for use of the outermost socket-like hole 21. Consequently, when using either of the other two socket-like holes 22 and 23 it is necessary to adjust the registered measurement with a correction factor corresponding to the distance between respective holes, e.g. a correction factor of 100 and 200 mm respectively when the hole spacing is 100 mm.

The end-piece assembly 20 presents a measuring tape holder 28 (vide in particular Figures 2 and 4), which is preferably made of metal (e.g. aluminium) and which is secured to the side surface of the end-piece assembly 20 remote from the reference plane 13 by means of screws 29, said side surface thus constituting the free end surface of the slide outwardly of the beams 1 and 2. The measuring tape holder 28 comprises an elongated plate, the longitudinal edges of which are bent or folded upwards through 180°, wherewith the tape holder is so dimensioned that the tape can be inserted between said folded edges while being arched about its longitudinal axis, such that the tape is slidably connected with the holder and guided thereby. Arching of the tape imparts additional firmness to the tape when displacing said tape along the tape holder.

The spacing of the folded long edges of the tape holder 28 is such as to enable the graduations on the tape 14 to be seen between said edges.

The ends of the tape holder 28 are curved through 90° and inserted in a respective bore 20a and 20b in the end-piece assembly 20.

One end 14a of the tape 14 is inserted through the bore 20a and into the tube 9a, and is anchored stationarily in an accurately determined position in relation to the slide holder and to the reference plane 13. In the illustrated embodiment, the outermost end of the measuring tape 14a has been removed and replaced with a metal rod 30, which is inserted into the tube 5 and to which the tape is secured by means of rivets 31 or like fasteners. The rod 30, in turn, is held in position in the tube 5 of the holder 3 by means of a grub screw 32 (Figure 1), which to this end is screwed into a groove 33 (Figure 2) in one end of the metal rod 30.

The other end 14b of the measuring tape passes through the bore 20b and extends freely in the tube 9b.

Thus, the part 14c of the measuring tape 14 located between the anchored end 14a and the free end 14b of the tape runs in a direction which is perpendicular to the displacement direction of the slide 9. When the slide is displaced, the tape portion 14c is thus dogged or likewise entrained by the tape holder 28, while the free tape end 14b moved out of or into the tube 9b.

The measuring tape 14 is graduated so that readings are taken from the free end of the slide, i.e. from the tape part 14c that runs through the tape holder 28. Calibratable reading of the scale is facilitated by means of a transparent scale index plate 34, e.g. a plastic plate, which can be moved along the holder.

Thus, the tape 14 can be read-off from the free end of the slide 9 remote from the object being measured, i.e. in the reading direction indicated by the arrow 35 in Figure 1, this direction, or sighting line, being parallel with or coinciding with the direction of slide displacement. Consequently, the measuring tape is read-off along a sighting line which is parallel with the sighting lines taken to read-off the scales 4 and 27 (indicated by respective arrows 36 and 37). An operator is therefore able to stand in front of the free end of the slide line and read-off all three scales simultaneously, despite the fact that the scales relate to linear measurements in three mutually different directional co-ordinates.

## Claims

1. A linear displacement measuring device comprising a slide holder (3), a measuring slide (9) carried by said slide holder (3) and arranged for rectilinear movement, and a measuring scale for registering the position of the slide relative to a reference position, characterized in that the measuring scale is in the form of a measuring tape (14) which is guided from a fixed end held skationary in relation to the reference position, parallel to the movement direction of the slide, around a tape holder (28) perpendicular to the movement direction of the slide, and then alon the other side of the slide parallel to the movement direction, to a movable end (14b), the tape holder being so constructed as to enable the tape to be read in the tape holder.

2. A device according to Claim 1, characterized in that the measuring slide (9) has two mutually parallel tubes (9a, 9b) each of which is arranged for movement along a respective slide channel (5, 6) located in the slide holder (3) upon displacement of the slide in relation to said slide holder, and in that said fixed end of the measuring tape is anchored within the one (5) slide channel while the moveable end (14b) of said measuring tape is located in the slide tube (9b) associated with the other slide channel.

3. A device according to any of the preceding claims, characterized in that the slide holder (3) has the form of a carriage which is arranged for movement at right angles to the displacement direction of the measuring slide (9) and which is capable of moving along at least one beam (1, 2) and which can be fixed in position on said beam, said beam forming, for example, part of a measuring bridge, alignment bench or the like for measuring dimensions of a damaged vehicle chassis and for straightening said chassis; in that the beam has provided thereon a linear.scale (4) for registering the position of the carriage on the beam; and in that the linear scale faces in the same direction as said tape part (14c) thereby to enable the respective positions of both the measuring slide (9) and the carriage (3) to be read-off in one and the same sighting direction.

4. A device according to Claim 3, characterized in that the measuring slide (9) has a measuring-location detector, e.g. a measuring point (26) or the like which is moveable at right angles to the direction of displacement of the carriage, and also of said detector, and which is intended to be brought into register with a selected measuring location on an object to be measured, e.g. said vehicle chassis; and in that the measuring-location detector is provided with a linear scale (27) which can be turned to face in the same direction as the tape part (14c) and the linear scale (4) on said beam, thereby enabling the respective positions of the measuring-location detector, the measuring slide and the carriage to be read-off in one and the same sighting direction.

5. A device according to any of the preceding claims, characterized by a scale index (34) which can be displaced along said tape part (14c) and which enables calibrated reading of the measuring tape.

## Revendications

1. Dispositif de mesure de déplacement linéaire comprenant une glissière (3), une glissière (9) portée par la glissière (3) et montée de manière à effectuer un mouvement rectiligne, et une échelle de mesure destinée à repérer la position de la glissière par rapport à une position de référence, dispositif caractérisé en ce que l'échelle de mesure se présente sous la forme d'un ruban de mesure (14) guidé à partir d'une extrémité maintenue fixe par rapport à la position de référence, parallèlement à la direction de déplacement de la glissière, autour d'un porte-ruban (28) perpendiculaire à la direction de déplacement de la glissière, puis le long de l'autre côté de la glissière parallèlement à sa direction de déplacement, vers une extrémité mobile (14b), le porte-ruban étant construit de façon qu'on puisse lire le ruban dans ce porte-ruban.

2. Dispositif selon la revendication 1, caractérisé en ce que la glissière de mesure (9) comporte deux tubes mutuellement parallèles (9a, 9b) disposés chacun de manière à se déplacer le long d'un passage correspondant (5, 6) placé dans la glissière (3) lorsque celle-ci se déplace par rapport à ce portecoulisse, et en ce que l'extrémité fixe du ruban de mesure est accrochée dans le premier passage de glissière (5), tandis que l'extrémité mobile (14b) de ce ruban de mesure est placée dans le tube de glissière (9b) associé à l'autre passage de glissière.

3. Dispositif selon l'une quelconque des revendications précédentes, caractérisé en ce que la glissière (3) se présente sous la forme d'un chariot monté de manière à pouvoir se déplacer perpendiculairement à la direction de déplacement de la glissière de mesure (9), à pouvoir se déplacer le long d'au moins une poutrelle (1, 2), et à pouvoir se fixer en place sur cette poutrelle, cette poutrelle faisant par exemple partie d'un pont de mesure, d'un marbre d'alignement ou analogue, pour mesurer les dimensions d'un châssis de véhicule endommagé et pour redresser ce châssis, en ce que la poutrelle comporte sur celle-ci une échelle linéaire (4) destinée à repérer la position du chariot sur la poutrelle; et en ce que l'échelle linéaire est tournée dans la même direction que la partie de ruban (14c) pour qu'on puisse ainsi lire dans une seule et même direction de visée les positions respectives à la fois de la coulisse de mesure (9) et du chariot (3).

4. Dispositif selon la revendication 3, caractérisé en ce que la glissière de mesure (9) comporte un détecteur d'emplacement de mesure tel que, par exemple, un point de mesure (26) ou analogue: qui peut se déplacer perpendiculairement à la direction de déplacement du chariot ainsi que du détecteur, et qui est destiné à être amené en coïncidence avec un emplacement de mesure sélectionné sur un objet à mesurer tel que par exemple le châssis de véhicule endommagé; et en ce que le détecteur d'emplacement de mesure est muni d'une échelle linéaire (27) qu'on peut faire tourner pour l'amener en face de la même direction que celle de la partie de ruban (14c) et de l'échelle linéaire (4) sur la poutrelle, de façon qu'on puisse lire dans une seule et même direction de visée les positions respectives du détecteur d'emplacement de mesure, de la coulisse de mesure et du chariot.

5. Dispositif selon l'une quelconque des revendications précédentes, caractérisé en ce qu'il comporte un repère d'échelle (34) qu'on peut déplacer le long de la partie de ruban (14c) et qui permet d'effectuer une mesure étalonnée du ruban de mesure.

## Patentansprüche

1. Linearverschiebungs-Meßeinrichtung mit einer Läuferhaltung (3), einem Meßläufer (9), der durch die Läuferhaltung (3) getragen ist und für geradlinige Bewegungen angeordnet ist, und einer Meßskala zur Registrierung der Position des Läufers bezüglich einer Referenzposition, dadurch gekennzeichnet, daß die Meßskala in der Form eines Maßbandes (14) ist, das von einem befestigten Ende, das bezüglich der Referenzposition stationär gehalten ist, parallel zu der Bewegungsrichtung des Läufers um eine zu der Bewegungsrichtung des Läufers rechtwinkligen Bandhalterung (28), und dann entlang der anderen Seite des Läufers, parallel zu der Bewegungsrichtung, zu einem bewegbaren Ende (14b) geführt ist, wobei die Behalterung so ausgebildet ist, um zu ermöglichen, daß das Band in der Bandhalterung gelesen wird.

2. Einrichtung nach Anspruch 1, dadurch gekennzeichnet, daß der Meßläufer (9) zwei wechselweise parallele Röhren (9a, 9b) aufweist, von denen jede für eine Bewegung entlang eines jeweiligen Läuferkanals (5, 6), der in der Läuferhalterung (3) angeordnet ist, und zwar auf einem Versatz des Läufers in bezug auf die Läuferhaltung, und dadurch, daß das befestigte Ende des Maßbandes innerhalb des einen Läuferkanals (5) verankert ist, während das bewegbare Ende (14b) des Maßbandes in der Läuferröhre (9b) eingerichtet ist, die mit dem anderen Kanal verbunden ist.

3. Einrichtung nach einem der vorangehenden Ansprüche, dadurch gekennzeichnet, daß die Läuferhalterung (3) die Form eines Wagens hat, der zur Bewegung um rechte Winkel zu der Verschiebungsrichtung des Meßläufers (9) angeordnet ist, und der geeignet ist, sich entlang von zumindest einem Träger (1, 2) zu bewegen, und der in einer Position auf dem Träger befestigt werden kann, wobei der Träger z.B. einen Teil einer Meßbrücke, eines Abgleichgestells oder ähnlichem bildet, um die Dimensionen eines beschädigten Fahrzeugchassis zu messen und um das Chassis auszurichten; daß der Träger darauf eine lineare Skala (4) zur Registrierung der Position des Wagens auf dem Träger vorgesehen hat; und daß die lineare Skala in dieselbe Richtung zeigt, wie der Bandteil (14c), um dadurch zu ermöglichen, daß die jeweiligen Positionen sowohl des Meßläufers (9) als auch des Wagens (3) in ein und derselben Sichtrichtung abgelesen werden.

4. Einrichtung nach Anspruch 3, dadurch gekennzeichnet, daß der Meßläufer (9) einen Meßortdetektor, z.B. einen Meßpunkt (26) oder ähnliches aufweist, der in rechten Winkeln zu der Richtung der Verschiebung des Wagens und auch des Detektors bewegbar ist, und der mit einem ausgewählten Meßort an einem zu messenden Objekt, z.B. dem Fahrzeugchassis, in Deckung gebracht werden soll: und daß der Meßortdetektor mit einer linearen Skala (27) ausgestattet ist, die gedreht werden kann, um in dieselbe Richtung wie der Bandteil (14c) und die lineare Skala (4) auf dem Träger zu zeigen, um dadurch zu ermöglichen, daß die jeweiligen Positionen des Meßortdetektors, des Meßläufers und des Wagens in ein und derselben Sichtrichtung abgelesen werden.

5. Einrichtung nach einem der vorangegangenen Ansprüche, gekennzeichnet durch einen Skalenindex (34), der entlang des Bandteils (14c) angeordnet werden kann und der ein kalibriertes Lesen des Maßbandes ermöglicht.

FIG. 4

FIG. 2

FIG. 1

FIG. 3

FIG. 5